# EUROPÄISCHE PATENTSCHRIFT

(11) **EP 4 045 355 B1**
(45) Veröffentlichungstag und Bekanntmachung des Hinweises auf die Patenterteilung: **29.01.2025**
(21) Anmeldenummer: 20792597.5
(22) Anmeldetag: 12.10.2020
(51) Int. Cl.: B60N 2/02, B60N 2/01, B60N 3/00, B60N 2/75, B60R 21/231, B60R 11/00

(54) **FAHRZEUGKONSOLENSYSTEM UND KRAFTFAHRZEUG**
VEHICLE CONSOLE SYSTEM AND MOTOR VEHICLE
SYSTÈME DE CONSOLE DE CARBURANT ET VÉHICULE À MOTEUR

(30) Priorität: 17.10.2019 DE 102019215985
(43) Veröffentlichungstag der Anmeldung: 24.08.2022
(73) Patentinhaber: VOLKSWAGEN AKTIENGESELLSCHAFT, 38440 Wolfsburg (DE)
(72) Erfinder: BORK, Simon, 38547 Calberlah (DE); HAHN, Janna, 38165 Lehre (DE); HARTMANN, Stephan, 39128 Magdeburg (DE); SCHUR, Frank, 39175 Biederitz (DE); GOERGENS, René, 38518 Gifhorn (DE)
(86) Internationale Anmeldenummer: PCT/EP2020/078655
(87) Internationale Veröffentlichungsnummer: WO 2021/074088

(56) Entgegenhaltungen:
- WO-A1-2018/210905
- DE-C1- 19 644 219

## Beschreibung

Die Erfindung betrifft ein Fahrzeugkonsolensystem, aufweisend einen Fahrzeugsitz und/oder eine Fahrzeugtischkonsole als eine Fahrzeugkonsole für einen Innenraum eines Kraftfahrzeuges, sowie ein Kraftfahrzeug.

DE 10 2013 216 549 B3 beschreibt einen Fahrzeugsitz mit Positionserkennung. Der Fahrzeugsitz ist mittels Oberschienen in Unterschienen geführt. Ortsfest in Bezug auf die Unterschienen ist eine Detektionseinheit angebracht. Die Detektionseinheit sendet elektromagnetische Wellen aus, die von an dem Fahrzeugsitz angeordneten Transpondern zur Positionserkennung empfangen werden.

US 2004/0008036 A1 beschreibt ein System zur drahtlosen Übertragung von Informationen oder Energie zwischen einem entfernbaren Fahrzeugsitz und der Fahrzeugkarosserie. Ein induktiver Übertrager hat eine Primärseite an der Fahrzeugkarosserie und eine Sekundärseite in dem Fahrzeugsitz. Mittel zum Messen einer Induktivität sind an der Primärseite zur Erkennung des entfernbaren Fahrzeugsitzes angeordnet.

EP 0 847 892 A2 beschreibt ein Fahrzeugsitzerkennungssystem mit einem Paar von Montageschienen, die an einem Boden eines Kraftfahrzeuges befestigbar sind. Die Montageschienen sind voneinander beabstandet und parallel zueinander angeordnet. Ein Sitzerkennungsschalter steht mit zumindest einer der Montageschienen in Verbindung. Der Sitzerkennungsschalter ist normalerweise offen, kann jedoch in eine geschlossene Position bewegt werden, wenn der Fahrzeugsitz an den Montageschienen befestigt wird. Ein Überwachungsschaltkreis überwacht den Status des Sitzerkennungsschalters.

WO 2006/108954 A2 beschreibt ein Positionserkennungssystem von entfernbaren Sitzen in einem Fahrzeug. Jeder der Sitze ist mit einem drahtlosen Kommunikationsmittel zur Kommunikation mit einer Kommunikationseinheit in dem Fahrzeug ausgestattet.

WO 2018/210905 A1 beschreibt ein Fahrzeugeinrichtungssystem für ein Kraftfahrzeug, mit zumindest einer Fahrzeugeinrichtung, insbesondere einem Fahrzeugsitz oder Fahrzeugtisch, und mit einer an einer Fahrzeugkarosserie befestigten oder befestigbaren Halterung zum lösbaren Arretieren der Fahrzeugeinrichtung an der Kraftfahrzeugkarosserie.

Aufgabe der Erfindung ist es, Nachteile bei aus dem Stand der Technik bekannten Erkennungssystemen für Fahrzeuge zu vermindern, insbesondere ein Fahrzeugkonsolensystem und ein Kraftfahrzeug bereitzustellen, die eine kostengünstige, einfache und zuverlässige Erkennung von Fahrzeugkonsolen ermöglichen.

Die voranstehende Aufgabe wird durch die Gegenstände der Patentansprüche, insbesondere durch ein Fahrzeugkonsolensystem nach Anspruch 1 und ein Kraftfahrzeug nach Anspruch 9, gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Fahrzeugkonsolensystem beschrieben sind, selbstverständlich auch im Zusammenhang mit dem erfindungsgemäßen Kraftfahrzeug und umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die eingangs gestellte Aufgabe gelöst durch ein Fahrzeugkonsolensystem mit den Merkmalen des Anspruchs 1.

Entsprechend wird eine Registrierung einer Fahrzeugkonsole in einem der zumindest zwei Befestigungsbereiche, nämlich in dem elektrisch kontaktieren Befestigungsbereich, mittels eines elektrischen Kontaktes zwischen der zumindest einen ersten elektrischen Kontaktfläche und der zumindest einen zweiten elektrischen Kontaktfläche durch das Steuergerät vorgenommen, welches daraufhin eine Anweisung ausgibt, um auf die Registrierung entsprechend zu reagieren oder dem Fahrer die Möglichkeit zu reagieren zu ermöglichen. Auf drahtlose Erkennungssysteme, wie sie aus dem Stand der Technik bekannt sind, kann dabei bewusst verzichtet werden und die bereits vorhandene Struktur der Fahrzeugkonsolen und der Befestigungsvorrichtung genutzt werden, wodurch ein besonders kostengünstiges und zuverlässiges Fahrzeugkonsolensystem bereitgestellt wird.

Erfindungsgemäß ist, dass die Befestigungsvorrichtung zumindest zwei Führungsschienen aufweist und die zumindest eine Fahrzeugkonsole zumindest zwei Führungselemente aufweist, die jeweils in einer der zumindest zwei Führungsschienen geführt sind. Entlang der Führungsschienen lässt sich die Fahrzeugkonsole führen und nahezu kontinuierlich verschieben.

Ferner ist erfindungsgemäß, dass die zumindest eine erste elektrische Kontaktfläche an zumindest einem ausfahrbaren Kontaktelement innerhalb eines der zumindest zwei Führungselemente angeordnet ist und die zweite elektrische Kontaktfläche an zumindest einer der zumindest zwei Führungsschienen angeordnet ist, wobei das ausfahrbare Kontaktelement derart ausgebildet ist, dass das ausfahrbare Kontaktelement sich beim Verriegeln an dem elektrisch kontaktierten Befestigungsbereich aus einer geschützten Position innerhalb des Führungselementes in eine elektrisch kontaktierende Position ausfährt, in der sich die zumindest eine erste elektrische Kontaktfläche und die zumindest eine zweite elektrische Kontaktfläche elektrisch kontaktieren. Das ausfahrbare Kontaktelement kann insbesondere ein drehbares Kontaktelement sein, dass sich aus der geschützten Position innerhalb des Führungselementes in die elektrisch kontaktierende Position drehen lässt. Das ausfahrbare Kontaktelement kann beispielsweise mit dem zumindest einen Verriegelungselement mechanisch gekoppelt sein und durch das Verriegeln ausgefahren werden. In der geschützten Position wird die zumindest eine zweite elektrische Kontaktfläche beim Verfahren des Führungselementes entlang seiner Führungsschiene vor einer mechanischen Belastung geschützt. In der elektrisch kontaktierenden Position hingegen erfolgt der elektrische Kontakt zu der zumindest einen ersten elektrischen Kontaktfläche.

Weiterhin ist bevorzugt, dass die zumindest eine Fahrzeugkonsole vier Führungselemente aufweist, wobei zwei ausfahrbare Kontaktelemente mit ersten elektrischen Kontaktflächen innerhalb von zwei schräg gegenüberliegenden Führungselementen angeordnet sind und jede der zwei Führungsschienen eine zweite elektrische Kontaktfläche aufweist, wobei die zweiten elektrischen Kontaktflächen entlang der Führungsschienen voneinander versetzt sind. Durch die Bereitstellung je zweier Führungselemente auf je einer der Führungsschienen ist eine kostengünstige und stabile Führung möglich, die zugleich Platz zwischen den Führungselementen für die Verriegelungselemente schafft. Durch die Anordnung als schräg gegenüberliegende erste elektrische Kontaktflächen und das Versetzen der zweiten elektrische Kontaktflächen entlang der Führungsschienen wird es möglich, dass die Fahrzeugkonsole unabhängig von ihrer Einbaurichtung mit geringem Aufwand stets zuverlässig erkannt wird. Es ist jedoch auch denkbar, dass ein symmetrischer Aufbau genutzt wird. Dabei liegen sich die ersten Kontaktflächen und zweiten Kontaktflächen jeweils gegenüber.

Außerdem ist bevorzugt, dass die zumindest eine erste elektrische Kontaktfläche mit einem Widerstandsnetzwerk verbunden ist, in dem ein Schalter verbaut ist, der dazu eingerichtet ist, geöffnet oder geschlossen zu werden, wenn eine Funktion der Fahrzeugkonsole ausgelöst wird. Dadurch wird nicht nur eine Erkennung der Position der Fahrzeugkonsole, sondern auch einer Funktion ermöglicht.

Auch ist bevorzugt, dass die zumindest eine erste elektrische Kontaktfläche mit einem Konsolensteuergerät verbunden ist, die mit einer drahtlosen Kommunikationseinheit ausgestattet und dazu eingerichtet ist, ein oder mehrere Signale mit dem Steuergerät auszutauschen, wenn eine Funktion der Fahrzeugkonsole ausgelöst wird. Auch dadurch wird nicht nur eine Erkennung der Position der Fahrzeugkonsole, sondern auch einer Funktion ermöglicht.

Dabei ist bevorzugt, dass die Funktion ein Hochklappen oder Herunterklappen einer Armlehne in einer als Fahrzeugsitz ausgebildeten Fahrzeugkonsole, ein Hochfahren oder Runterfahren einer als Fahrzeugtischkonsole ausgebildeten Fahrzeugkonsole, und/oder ein Ausziehen oder Auseinanderfalten einer Tischplatte oder einer Tischschublade in einer als Fahrzeugtischkonsole ausgebildeten Fahrzeugkonsole ist. Das Auslösen der Funktion führt somit zu einer Zustandsänderung des Fahrzeugsitzes oder der Fahrzeugtischkonsole. Eine solche Zustandsänderung kann insbesondere bewirken, dass ein Airbag, insbesondere ein sogenannter Centerairbag an einem Fahrzeugsitz, bei einem Unfall eventuell unter ungünstigen Umständen nicht mehr korrekt funktionieren könnte, da der Airbag durch die Armlehne, die Fahrzeugtischkonsole, die Tischplatte und/oder die Tischschublade blockiert werden könnte. Wenn das Steuergerät die Position der betroffenen Fahrzeugkonsole in dem elektrisch kontaktierten Befestigungsbereich zusammen mit der Funktion erkennt, kann eine entsprechende Anweisung von dem Steuergerät ausgegeben werden, die den Fahrer darauf aufmerksam macht, insbesondere dazu auffordert, den herbeigeführten Zustand zu ändern, also beispielsweise die Armlehne herunterzuklappen, die Fahrzeugtischkonsole herunterzufahren und/oder die Tischplatte oder die Tischschublade einzuziehen oder zusammenzufalten.

Zusätzlich ist bevorzugt, dass das Steuergerät dazu eingerichtet ist, als Anweisung ein Betreiben einer Sitzheizung in der als Fahrzeugsitz ausgebildeten Fahrzeugkonsole mittels Bestromens der zumindest einen zweiten elektrischen Kontaktfläche auszugeben. Dies ermöglicht es, eine stromführende Befestigungsvorrichtung, insbesondere die Führungsschienen, nicht permanent mit einem zum Betreiben der Sitzheizung notwendigen Strom zu bestromen, um eine Sitzheizungsfunktion an dem entnehmbaren Fahrzeugsitz bereitzustellen. Dies ist bei hohen Strömen, wie sie insbesondere bei Fahrzeugsitzen mit Lederbezug notwendig sind, problematisch, da die Befestigungsvorrichtung nass werden kann und es bei permanent fließenden hohen Strömen dadurch unter ungünstigen Umständen zu einem Kurzschluss kommen könnte. Mit der erfindungsgemäßen Erkennung des Fahrzeugsitzes in dem elektrisch kontaktierten Befestigungsbereich hingegen ist es möglich, den erhöhten Strom nur dann zu führen, wenn ein elektrischer Kontakt festgestellt und somit registriert wird, dass der Fahrzeugsitz sich in der Einbauposition befindet.

Nach einem zweiten Aspekt löst die Erfindung die eingangs erwähnte Aufgabe durch ein Kraftfahrzeug mit einem erfindungsgemäßen Fahrzeugkonsolensystem.

Dabei ist bevorzugt, dass sich der elektrisch kontaktierte Befestigungsbereich zwischen einem Fahrerersitz und einem Beifahrersitz befindet, wobei die zumindest eine Fahrzeugkonsole des Fahrzeugkonsolensystems als Fahrzeugtischkonsole ausgebildet ist und das Steuergerät dazu eingerichtet ist, als Anweisung ein Anzeigen eines Zustandes der Fahrzeugtischkonsole auf einer Anzeige des Kraftfahrzeuges auszugeben. Der Zustand der Fahrzeugtischkonsole wird durch die Funktion ausgelöst bzw. verändert. Die Fahrzeugtischkonsole stellt zwischen dem Fahrersitz und dem Beifahrersitz aufgrund des dort eingebauten Centerairbags ein mögliches Problem während der Fahrt dar und kann erfindungsgemäß mit einfachen Mitteln auf ihren Zustand hin überwacht werden. Dadurch wird die Sicherheit der Insassen des Kraftfahrzeuges noch weiter erhöht.

Anhand der beigefügten Zeichnung wird die Erfindung nachfolgend näher erläutert. Sämtliche aus den Ansprüchen, der Beschreibung oder der Figur hervorgehenden Merkmale, einschließlich konstruktiver Einzelheiten, können sowohl für sich als auch in den beliebigen verschiedenen Kombinationen erfindungswesentlich sein, soweit der Gegenstand nicht über die die Ansprüche hinausgeht. Es zeigt:
- Fig. 1: eine perspektivische und geschnittene Seitenansicht in einen Innenraum eines Ausführungsbeispieles eines erfindungsgemäßen Kraftfahrzeuges mit einem Fahrzeugkonsolensystem gemäß einem Ausführungsbeispiel der Erfindung,
- Fig. 2: eine Seitenansicht auf einen Ausschnitt des Fahrzeugkonsolensystems aus Fig. 1, in dem ein Airbag ausgelöst wurde,
- Fig. 3: die Seitenansicht aus Fig. 2 mit dem Unterschied, dass eine Fahrzeugtischkonsole hochgefahren ist,
- Fig. 4: eine perspektivische Unterseitenansicht auf die Fahrzeugtischkonsole aus Fig. 1,
- Fig. 5: eine schematische Querschnittsansicht durch einen Abschnitt des Fahrzeugkonsolensystems aus Fig. 1,
- Fig. 6: die schematische Querschnittsansicht aus Fig. 5 mit dem Unterschied, dass ausfahrbare Kontaktelemente ausgefahren worden sind,
- Fig. 7: eine schematische Draufsicht auf den Innenraum des Kraftfahrzeuges aus Fig. 1,
- Fig. 8: eine schematische Ansicht auf die elektrische Kontaktierung der Fahrzeugtischkonsole des Fahrzeugkonsolensystems aus Fig. 6 und gemäß einem ersten Ausführungsbeispiel, und
- Fig. 9: eine schematische Ansicht auf die elektrische Kontaktierung der Fahrzeugtischkonsole des Fahrzeugkonsolensystems aus Fig. 6 und gemäß einem zweiten Ausführungsbeispiel.

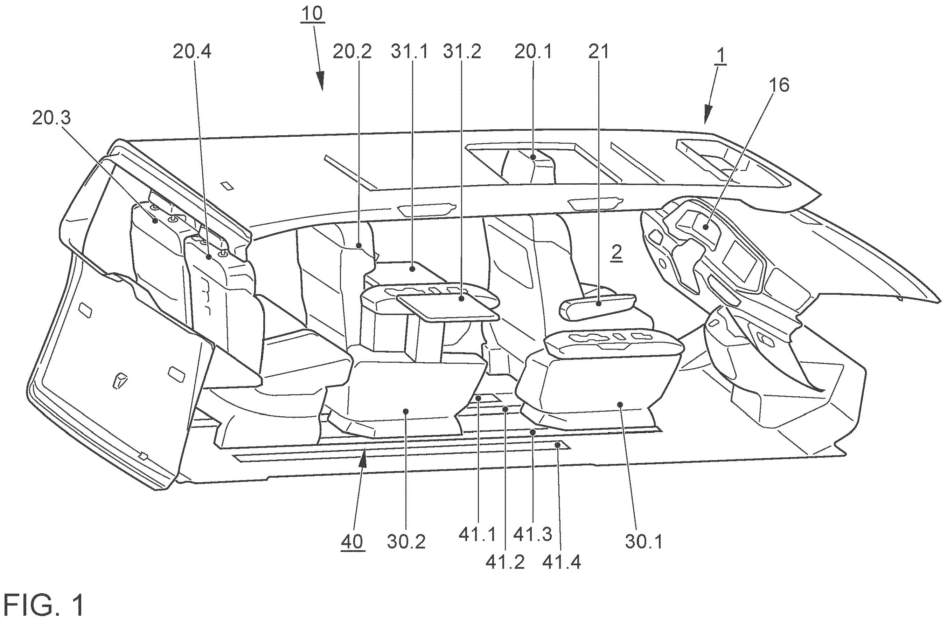

Elemente mit gleicher Funktion und Wirkungsweise sind in den Figuren 1 bis 9 jeweils mit denselben Bezugszeichen versehen.

Figur 1 zeigt eine perspektivische Seitenansicht in einen Innenraum 2 eines Ausführungsbeispieles eines erfindungsgemäßen Kraftfahrzeuges 1 mit einem Fahrzeugkonsolensystem 10 gemäß einem Ausführungsbeispiel der Erfindung. Das Fahrzeugkonsolensystem 10 weist eine Befestigungsvorrichtung 40 auf, die im Innenraum 2 an einem Fahrzeugboden des Kraftfahrzeuges 1 angeordnet ist. An dieser Befestigungsvorrichtung 40 sind die gezeigten Kraftfahrzeugsitze 20.1, 20.2, 20.3, 20.4 in einer ersten, zweiten und dritten Reihe befestigt. Hierzu weist die Befestigungsvorrichtung 40 mehrere Führungsschienen 41 auf, wovon nur die Führungsschienen 41.1, 41.2, 41.3, 41.4 gezeigt sind. Je an zwei der Führungsschienen 41 sind die Kraftfahrzeugsitze 20.1, 20.2, 20.3, 20.4 befestigt. Ferner weist das Fahrzeugkonsolensystem 10 zwei Fahrzeugtischkonsolen 30.1, 30.2 auf, die an den Führungsschienen 41.2, 41.3 befestigt sind. Die Kraftfahrzeugsitze 20.2, 20.3, 20.4 und die Fahrzeugtischkonsolen 30.1, 30.2 sind aus den Führungsschienen 41.1, 41.2, 41.3, 41.4 und somit aus dem Innenraum 2 entnehmbar und ansonsten entlang der Führungsschienen 41.1, 41.2, 41.3, 41.4 verfahrbar.

Die Seitenansicht ist der Länge des Kraftfahrzeuges 1 nach geschnitten und zeigt nicht die weiteren Kraftfahrzeugsitze 20, die neben den gezeigten Kraftfahrzeugsitzen 20.1, 20.2, 20.4 angeordnet sind, sowie nicht eine weitere Führungsschiene 41 neben der Führungsschiene 41.4, an der diese weiteren Kraftfahrzeugsitze 20 befestigt sind. Ferner ist eine weitere Führungsschiene 41, an der die Fahrzeugsitze 20.1, 20.2, 20.3 befestigt sind, aus dieser Perspektive heraus nicht sichtbar.

Der als Fahrersitz positionierte Kraftfahrzeugsitz 20.1 bietet Blick auf eine Anzeige 16, die zugleich den Tacho und andere Informationen über das Kraftfahrzeug 1 anzeigen kann oder neben der diese angeordnet sein können.

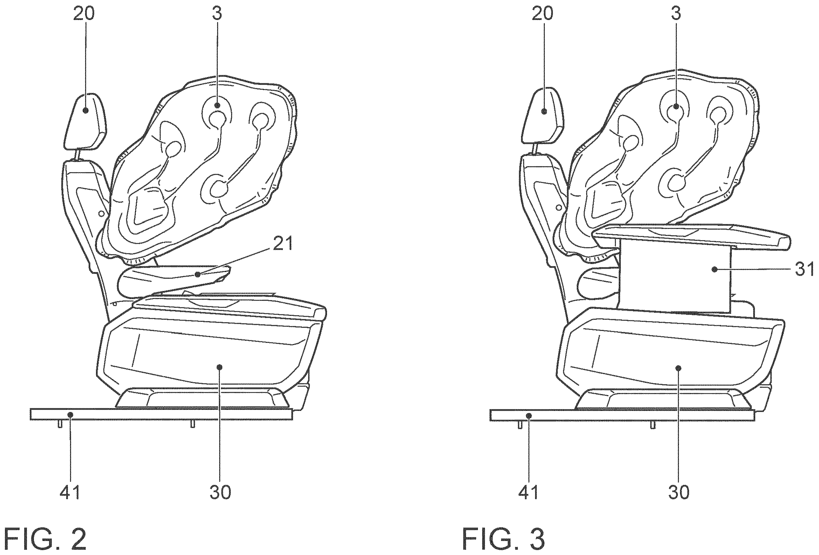

Figur 2 zeigt eine Seitenansicht auf einen Ausschnitt des Fahrzeugkonsolensystems aus Fig. 1, in dem ein Airbag 3 infolge eines Unfalles ausgelöst wurde. Bei dem Airbag 3 handelt es sich um einen sogenannten Centerairbag an dem Fahrzeugsitz 20. Der Airbag 3 funktionierte in diesem Zustand von Fahrzeugsitz 20 und Fahrzeugtischkonsole 30 ordnungsgemäß, da er sich frei entfalten konnte und einen Passagier auf dem Fahrzeugsitz 20 schützen konnte.

Figur 3 zeigt die Seitenansicht aus Fig. 2 mit dem Unterschied, dass die Fahrzeugtischkonsole 30 hochgefahren ist. Zu sehen ist an der Fahrzeugtischkonsole 30 dabei die zudem ausfahrbare Tischplatte 31. Aufgrund der hochgefahrenen Fahrzeugtischkonsole 30 kommt es bei einem Unfall - anders als in dem Zustand der Fahrzeugtischkonsole 30 gemäß Fig. 2 - zu einer Kollision zwischen dem Airbag 3 und der Fahrzeugtischkonsole 30. Der Airbag 3 könnte unter ungünstigen Umständen nicht ordnungsgemäß funktionieren. In diesem beispielhaften Falle sollte der Fahrer des Kraftfahrzeuges 1 vor Fahrtantritt auf das Problem der hochgefahrenen Fahrzeugtischkonsole 30 hingewiesen werden. Dazu muss die Position der Fahrzeugtischkonsole 30 neben dem Fahrzeugsitz 20 und der Zustand der Fahrzeugtischkonsole 30 als hochgefahren erkannt werden.

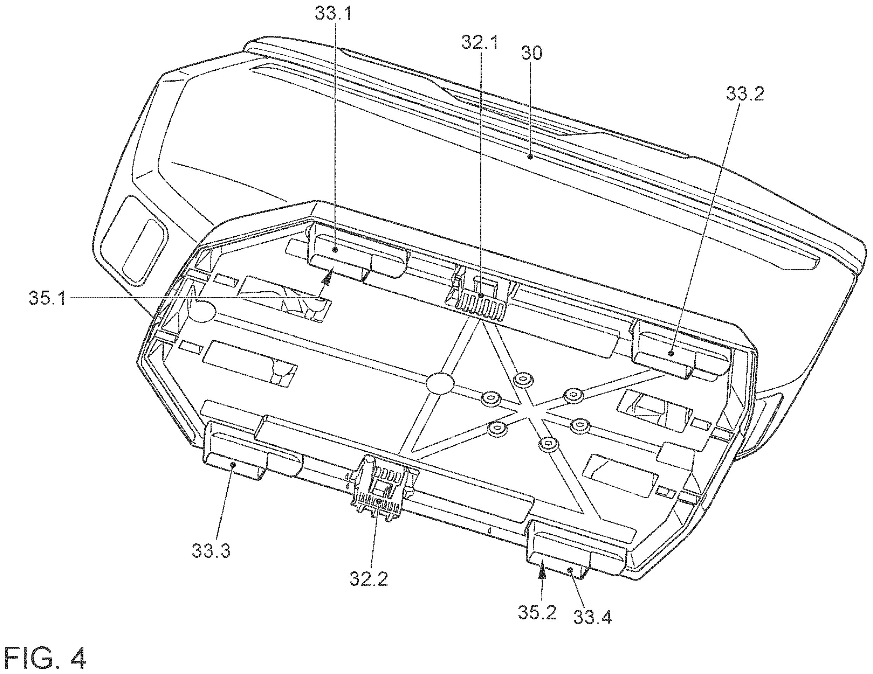

Figur 4 zeigt eine perspektivische Unterseitenansicht auf die Fahrzeugtischkonsole 30 aus Fig. 1. Die Fahrzeugtischkonsole 30 weist an seiner Unterseite ein erstes und ein zweites Führungselement 33.1, 33.2 und ein erstes Verriegelungselement 32.1 zwischen dem ersten und zweiten Führungselement 33.1, 33.2 auf. Ferner weist die Fahrzeugtischkonsole 30 an seiner Unterseite ein drittes und ein viertes Führungselement 33.3, 33.4 und ein zweites Verriegelungselement 32.2 zwischen dem dritten und vierten Führungselement 33.3, 33.4 auf. Das erstes und zweite Führungselement 33.1, 33.2 können in einer ersten der Führungsschienen 41 und das dritte und vierte Führungselemente 33.3, 33.4 können in einer zu dieser ersten Führungsschiene 41 parallelen zweiten Führungsschiene 41 geführt werden. Die Verriegelungselemente 32.1, 32.2 sind vorliegend in Form von Krallen ausgebildet. Diese ermöglichen ein Verriegeln der Fahrzeugtischkonsole 30 in Befestigungsbereichen der Führungsschienen 41.

Angedeutet sind in Fig. 4 erste elektrischen Kontaktflächen 35.1, 35.2, wovon sich eine innerhalb des ersten Führungselementes 33.1 und eine innerhalb des vierten Führungselementes 33.4 befindet. Damit liegen die ersten elektrischen Kontaktflächen 35.1, 35.2 einander schräg gegenüber relativ zu der Erstreckung der Fahrzeugtischkonsole 30. Dies ermöglicht es, nur wenige erste elektrische Kontaktflächen 35 vorzusehen, mittels derer durch Kontakt mit korrespondierenden zweiten elektrischen Kontaktflächen 42 an den Führungsschienen 41 ein elektrischer Kontakt hergestellt werden kann, um eine Position der Fahrzeugtischkonsole 30 zu erkennen. Dabei kann die Fahrzeugtischkonsole 30 unabhängig von einer Richtung, entlang derer die Fahrzeugtischkonsole 30 an den Führungsschienen 41 befestigt wird, befestigt und seine Position dennoch zuverlässig erkannt werden.

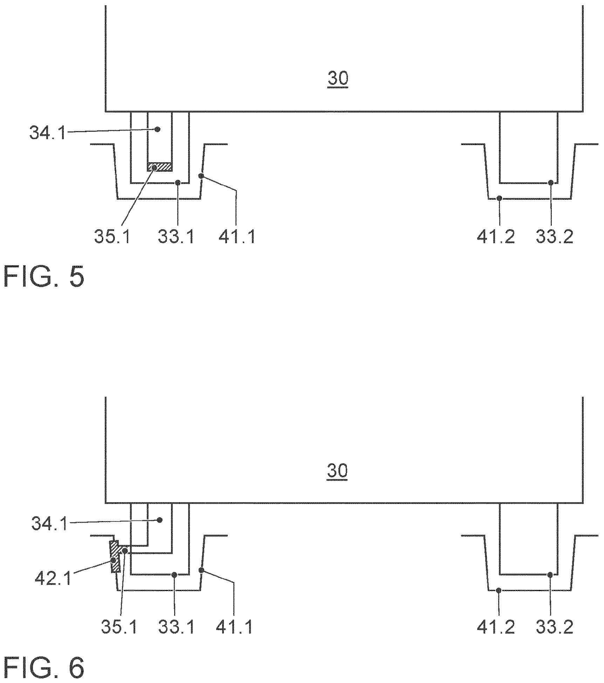

Figur 5 zeigt eine schematische Querschnittsansicht durch einen Abschnitt des Fahrzeugkonsolensystems 10 aus Fig. 1. In dieser Darstellung ist die erste elektrische Kontaktfläche 35.1 zu erkennen, die an einem ausfahrbaren Kontaktelement 34.1, das hier als drehbares Kontaktelement 34.1 ausgeführt ist, innerhalb des Führungselementes 33.1 ausgebildet ist. Die erste elektrische Kontaktfläche 35.1 befindet sich hierbei in einer innerhalb des Führungselementes 33.1 geschützten Position, sodass diese vor mechanischer Belastung bei Verschieben des Führungselementes 33.1 entlang der Führungsschienen 41.1 geschützt ist.

Figur 6 zeigt die schematische Querschnittsansicht aus Fig. 5 mit dem Unterschied, dass das ausfahrbare Kontaktelement 34.1 gedreht worden ist. Gegenüber Fig. 5 wurden die Führungselemente 33.1, 33.2 zu einem elektrisch kontaktierten Befestigungsbereich der Führungsschienen 41.1, 41.2 verschoben, in dem die zweite elektrische Kontaktfläche 42.1 an einer Innenseite der Führungsschiene 41.1 angeordnet ist, sodass das drehbare Kontaktelement 34.1, 34.2 zum Zwecke der elektrischen Kontaktierung der ersten elektrischen Kontaktflächen 35.1 mit diesen gedreht worden ist.

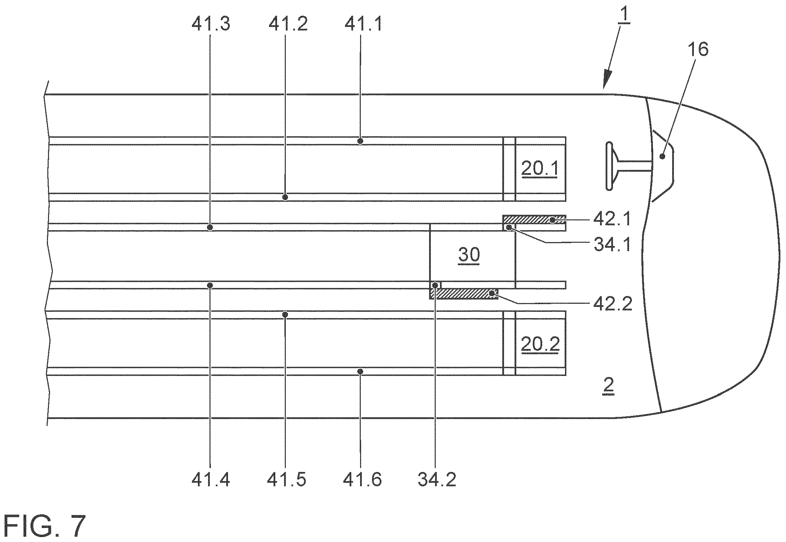

Figur 7 zeigt eine schematische Draufsicht auf den Innenraum 2 des Kraftfahrzeuges 1 aus Fig. 1 und die elektrische Kontaktierung gemäß Fig. 6. Insgesamt sechs Führungsschienen 41.1, 41.2, 41.3, 41.4, 41.5, 41.6 sind an dem Kraftfahrzeug 1 angeordnet. Auf den Führungsschienen 41.1, 41.2 ist der Fahrersitz 20.1 befestigt. Auf den Führungsschienen 41.5, 41.6 ist der Beifahrersitz 20.2 befestigt. Entlang der Führungsschienen 41.3, 41.4 sind die voneinander versetzten zweiten elektrischen Kontaktflächen 42.1, 42.2 angeordnet, die in der gezeigten Position von den ersten elektrischen Kontaktflächen 35.1, 35.2 an den drehbaren Kontaktelemente 34.1, 34.2 der Fahrzeugtischkonsole 30 kontaktiert werden. Durch den zwischen den ersten elektrischen Kontaktflächen 35.1, 35.2 und den zweiten elektrischen Kontaktflächen 42.1, 42.2 fließenden Strom wird die Fahrzeugtischkonsole 30 zwischen dem Fahrersitz 20.1 und dem Beifahrersitz 20.2 erkannt.

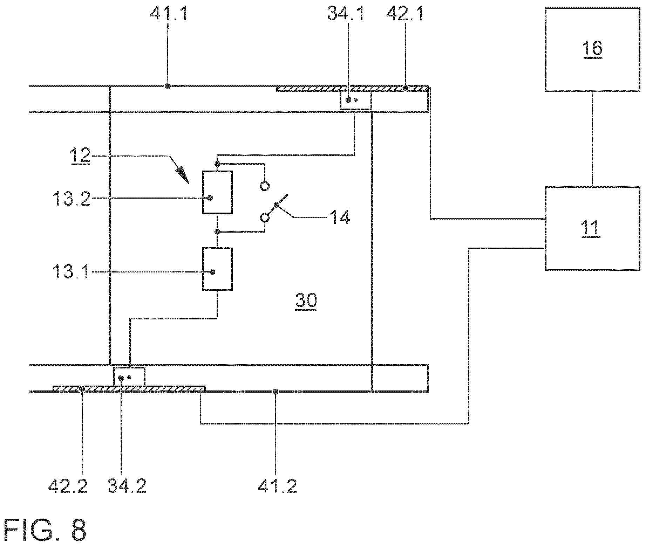

Figur 8 zeigt eine schematische Ansicht auf die elektrische Kontaktierung einer Fahrzeugtischkonsole 30 des Fahrzeugkonsolensystems 10 aus Fig. 6 und gemäß einem ersten Ausführungsbeispiel mit einem Widerstandsnetzwerk 12. Der erste Widerstand 13.1 in dem Widerstandsnetzwerk 12 wird durch den elektrischen Kontakt zwischen den ersten elektrischen Kontaktflächen 35.1, 35.2 und den zweiten elektrischen Kontaktflächen 42.1, 42.2 mit Strom durchflossen und weist das mit den zweiten elektrischen Kontaktflächen 42.1, 42.2 verbundene Steuergerät 11 darauf hin, dass die Fahrzeugtischkonsole 30 sich in dem elektrisch kontaktierten Befestigungsbereich befindet. Sofern eine Funktion der Fahrzeugtischkonsole 30, etwa ein Hochfahren der Fahrzeugtischkonsole 30 ausgelöst wird, wird der Schalter 14 geschlossen und der zweite Widerstand 13.2, der zum ersten Widerstand 13.1 in Reihe geschaltet ist, kurzgeschlossen. Diese Widerstandsänderung von dem ersten Widerstand 13.1 und dem zweiten Widerstand 13.2 auf nur noch den ersten Widerstand 13.1 wird von dem Steuergerät 11 registriert und als potentielles Problem hinsichtlich einer möglichen Auslösung des Airbags 3 interpretiert. Daraufhin gibt das Steuergerät 11 an der Anzeige 16 eine Fehlermeldung aus und weist den Fahrer darauf hin, dass die Fahrzeugtischkonsole 30 vor Fahrtantritt eingefahren werden sollte, um ein einwandfreies Funktionieren des Airbags 3 zu gewährleisten.

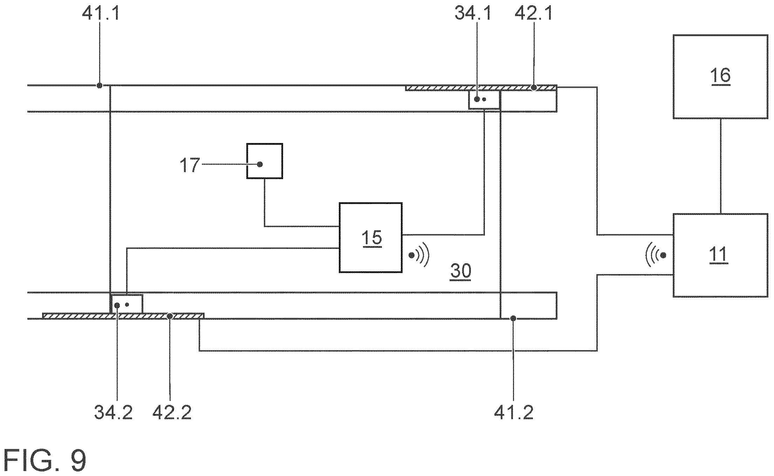

Figur 9 zeigt eine schematische Ansicht auf die elektrische Kontaktierung der Fahrzeugtischkonsole 30 des Fahrzeugkonsolensystems 10 aus Fig. 6 und gemäß einem zweiten Ausführungsbeispiel. Anders als gemäß dem ersten Ausführungsbeispiel aus Fig. 8 ist kein Widerstandsnetzwerk 12, sondern ein Konsolensteuergerät 15 in der Fahrzeugtischkonsole 30 zwischen den ersten elektrischen Kontaktflächen 35.1, 35.2 angeordnet. Das Konsolensteuergerät 15 kann die Zustände der Fahrzeugtischkonsole 30 registrieren und mittels einer drahtlosen Kommunikationseinheit drahtlos an das Steuergerät 11 übermitteln. Ferner kann das Konsolensteuergerät 15 eine Ladebuchse 17 oder andere Verbraucher der Fahrzeugtischkonsole 30 mit dem zwischen den ersten elektrischen Kontaktflächen 35.1, 35.2 fließendem Strom versorgen. Hier ist auch eine bidirektionale Kommunikation möglich, sodass das Steuergerät 11 auch Steuersignale oder Informationssignale an die Konsole übertragen kann, beispielsweise ein freischalten der Ladebuchse oder ein sperren der Ladebuchse vornehmen kann.

### Bezugszeichenliste

- 1: Kraftfahrzeug
- 2: Innenraum
- 3: Airbag

- 10: Fahrzeugkonsolensystem
- 11: Steuergerät
- 12: Widerstandsnetzwerk
- 13: Widerstand
- 14: Schalter
- 15: Konsolensteuergerät
- 16: Anzeige
- 17: Ladebuchse

- 20: Fahrzeugsitz
- 21: Armlehne

- 30: Fahrzeugtischkonsole
- 31: Tischplatte
- 32: Verriegelungselement
- 33: Führungselement
- 34: ausfahrbares Kontaktelement
- 35: erste elektrische Kontaktfläche

- 40: Befestigungsvorrichtung
- 41: Führungsschienen
- 42: zweite elektrische Kontaktfläche

## Patentansprüche

1. Fahrzeugkonsolensystem (10) für einen Innenraum (2) eines Kraftfahrzeuges (1), wobei das Fahrzeugkonsolensystem (10) aufweist:
(a) zumindest einen Fahrzeugsitz (20) und/oder eine Fahrzeugtischkonsole (30) als zumindest eine Fahrzeugkonsole (20, 30), wobei die zumindest eine Fahrzeugkonsole (20, 30) zumindest ein Verriegelungselement (32) und zumindest eine erste elektrische Kontaktfläche (35) aufweist,
(b) zumindest eine Befestigungsvorrichtung (40), die zum Befestigen der zumindest einen Fahrzeugkonsole (20, 30) an der Befestigungsvorrichtung (40) korrespondierend zu dem zumindest einen Verriegelungselement (32) ausgebildet ist, wobei die Befestigungsvorrichtung (40) zwei Befestigungsbereiche aufweist, an der die zumindest eine Fahrzeugkonsole (20, 30) mittels des zumindest einen Verriegelungselementes (32) verriegelbar ist, und wobei die Befestigungsvorrichtung (40) an einem elektrisch kontaktierten Befestigungsbereich der zwei Befestigungsbereiche eine zu der ersten elektrischen Kontaktfläche (35) korrespondierende zumindest zweite elektrische Kontaktfläche (42) aufweist, und
(c) ein Steuergerät (11), das mit der zumindest einen zweiten elektrischen Kontaktfläche (42) elektrisch verbunden ist und dazu eingerichtet ist, den elektrischen Kontakt zwischen der zumindest einen ersten elektrischen Kontaktfläche (35) und der zumindest zweiten elektrischen Kontaktfläche (42) zu registrieren und eine Anweisung auszugeben,
(d) wobei die Befestigungsvorrichtung (40) zumindest zwei Führungsschienen (41) aufweist und die zumindest eine Fahrzeugkonsole (20, 30) zumindest zwei Führungselemente (33) aufweist, die jeweils in einer der zumindest zwei Führungsschienen (41) geführt sind,
(e) wobei die zumindest eine erste elektrische Kontaktfläche (35) an zumindest einem ausfahrbaren Kontaktelement (34) innerhalb eines der zumindest zwei Führungselemente (33) angeordnet ist und die zweite elektrische Kontaktfläche (42) an zumindest einer der zumindest zwei Führungsschienen (41) angeordnet ist, wobei das ausfahrbare Kontaktelement (34) derart ausgebildet ist, dass das ausfahrbare Kontaktelement (34) sich beim Verriegeln an dem elektrisch kontaktierten Befestigungsbereich aus einer geschützten Position innerhalb des Führungselementes (33) in eine elektrisch kontaktierende Position ausfährt, in der sich die zumindest eine erste elektrische Kontaktfläche (35) und die zumindest eine zweite elektrische Kontaktfläche (42) elektrisch kontaktieren.

2. Fahrzeugkonsolensystem (10) nach dem voranstehenden Anspruch, **dadurch gekennzeichnet, dass** die zumindest eine Fahrzeugkonsole (20, 30) vier Führungselemente (33) aufweist, wobei zwei ausfahrbare Kontaktelemente (34) mit ersten elektrischen Kontaktflächen (35) innerhalb von zwei schräg gegenüberliegenden Führungselementen (33) angeordnet sind und jede der zwei Führungsschienen (41) eine zweite elektrische Kontaktfläche (42) aufweist, wobei die zweiten elektrischen Kontaktflächen (42) entlang der Führungsschienen (41) voneinander versetzt sind.

3. Fahrzeugkonsolensystem (10) nach einem der voranstehenden Ansprüche, **dadurch gekennzeichnet, dass** die zumindest eine erste elektrische Kontaktfläche (35) mit einem Widerstandsnetzwerk (12) verbunden ist, in dem ein Schalter (14) verbaut ist, der dazu eingerichtet ist, geöffnet oder geschlossen zu werden, wenn eine Funktion der Fahrzeugkonsole (20, 30) ausgelöst wird.

4. Fahrzeugkonsolensystem (10) nach einem der voranstehenden Ansprüche, **dadurch gekennzeichnet, dass** die zumindest eine erste elektrische Kontaktfläche (35) mit einem Konsolensteuergerät (15) verbunden ist, die mit einer drahtlosen Kommunikationseinheit ausgestattet und dazu eingerichtet ist, ein oder mehrere Signale mit dem Steuergerät (11) auszutauschen, wenn eine Funktion der Fahrzeugkonsole (20, 30) ausgelöst wird.

5. Fahrzeugkonsolensystem (10) nach Anspruch 3 oder 4, **dadurch gekennzeichnet, dass** die Funktion ein Hochklappen oder Herunterklappen einer Armlehne (21) einer als Fahrzeugsitz (20) ausgebildeten Fahrzeugkonsole (20, 30), ein Hochfahren oder Runterfahren einer als Fahrzeugtischkonsole (30) ausgebildeten Fahrzeugkonsole (20, 30), und/oder ein Ausziehen oder Auseinanderfalten einer Tischplatte (21) oder einer Tischschublade einer als Fahrzeugtischkonsole (30) ausgebildeten Fahrzeugkonsole (20, 30) ist.

6. Fahrzeugkonsolensystem (10) nach einem der voranstehenden Ansprüche, **dadurch gekennzeichnet, dass** das Steuergerät (11) dazu eingerichtet ist, als Anweisung ein Betreiben einer Sitzheizung der als Fahrzeugsitz (20) ausgebildeten Fahrzeugkonsole (20, 30) mittels Bestromens der zumindest einen zweiten elektrischen Kontaktfläche (42) auszugeben.

7. Kraftfahrzeug (1) mit einem Fahrzeugkonsolensystem (10) nach einem der voranstehenden Ansprüche.

8. Kraftfahrzeug (1) nach Anspruch 7, **dadurch gekennzeichnet, dass** sich der elektrisch kontaktierte Befestigungsbereich zwischen einem Fahrerersitz (20) und einem Beifahrersitz (20) befindet, wobei die zumindest eine Fahrzeugkonsole (20, 30) des Fahrzeugkonsolensystems (10) als Fahrzeugtischkonsole (30) ausgebildet ist und das Steuergerät (11) dazu eingerichtet ist, als Anweisung ein Anzeigen eines Zustandes der Fahrzeugtischkonsole (30) auf einer Anzeige (16) des Kraftfahrzeuges (1) auszugeben.

## Claims

1. Vehicle console system (10) for an interior compartment (2) of a motor vehicle (1), wherein the vehicle console system (10) has:
(a) at least one vehicle seat (20), and/or one vehicle table console (30), as at least one vehicle console (20, 30), wherein the at least one vehicle console (20, 30) has at least one locking element (32) and at least one first electrical contact surface (35),
(b) at least one fastening device (40), which is designed for the fastening of the at least one vehicle console (20, 30) to the fastening device (40) in a manner corresponding to the at least one locking element (32), wherein the fastening device (40) has two fastening regions to which the at least one vehicle console (20, 30) is lockable by means of the at least one locking element (32), and wherein the fastening device (40) has on an electrically contacted fastening region of the two fastening regions an at least second electrical contact surface (42) which corresponds to the first electrical contact surface (35), and
(c) a control unit (11), which is connected electrically to the at least one second electrical contact surface (42) and is configured to register the electrical contact between the at least one first electrical contact surface (35) and the at least second electrical contact surface (42) and to output an instruction,
(d) wherein the fastening device (40) has at least two guide rails (41) and the at least one vehicle console (20, 30) has at least two guide elements (33), each of which is guided in one of the at least two guide rails (41),
(e) wherein the at least one first electrical contact surface (35) is arranged on at least one extendable contact element (34) within one of the at least two guide elements (33), and the second electrical contact surface (42) is arranged on at least one of the at least two guide rails (41), wherein the extendable contact element (34) is designed in such a way that, during the locking to the electrically contacted fastening region, the extendable contact element (34) extends from a protected position within the guide element (33) into an electrically contacting position, in which the at least one first electrical contact surface (35) and the at least one second electrical contact surface (42) contact electrically.

2. Vehicle console system (10) according to the preceding claim, **characterized in that** the at least one vehicle console (20, 30) has four guide elements (33), wherein two extendable contact elements (34) with first electrical contact surfaces (35) are arranged within two diagonally opposite guide elements (33) and each of the two guide rails (41) has a second electrical contact surface (42), wherein the second electrical contact surfaces (42) are offset from one another along the guide rails (41).

3. Vehicle console system (10) according to either of the preceding claims, **characterized in that** the at least one first electrical contact surface (35) is connected to a resistor network (12) in which a switch (14) is installed, which switch is configured to be opened or closed whenever a function of the vehicle console (20, 30) is triggered.

4. Vehicle console system (10) according to one of the preceding claims, **characterized in that** the at least one first electrical contact surface (35) is connected to a console control unit (15) which is equipped with a wireless communication unit and which is configured to exchange one or more signals with the control unit (11) whenever a function of the vehicle console (20, 30) is triggered.

5. Vehicle console system (10) according to Claim 3 or 4, **characterized in that** the function is a folding-up or folding-down of an armrest (21) of a vehicle console (20, 30) in the form of a vehicle seat (20), a raising or lowering of a vehicle console (20, 30) in the form of a vehicle table console (30), and/or a pulling-out or folding-out of a tabletop (21) or of a table drawer of a vehicle console (20, 30) in the form of a vehicle table console (30).

6. Vehicle console system (10) according to one of the preceding claims, **characterized in that** the control unit (11) is configured to output an instruction concerning operation of a seat heater of the vehicle console (20, 30) in the form of a vehicle seat (20) by means of electrical energization of the at least one second electrical contact surface (42).

7. Motor vehicle (1) having a vehicle console system (10) according to one of the preceding claims.

8. Motor vehicle (1) according to Claim 7, **characterized in that** the electrically contacted fastening region is situated between a driver's seat (20) and a front passenger seat (20), wherein the at least one vehicle console (20, 30) of the vehicle console system (10) is in the form of a vehicle table console (30) and the control unit (11) is configured to output, as an instruction, an indication of a state of the vehicle table console (30) on a display (16) of the motor vehicle (1).

## Revendications

1. Système de console de voiture (10) pour un habitacle (2) d'un véhicule automobile (1), le système de console de voiture (10) présentant :
(a) au moins un siège de véhicule (20) et/ou une console de table de véhicule (30) en tant qu'au moins une console de véhicule (20, 30), dans lequel ladite au moins une console de véhicule (20, 30) présente au moins un élément de verrouillage (32) et au moins une première surface de contact électrique (35),
(b) au moins un dispositif de fixation (40) qui est réalisé pour fixer ladite au moins une console de véhicule (20, 30) au dispositif de fixation (40) en correspondance avec ledit au moins un élément de verrouillage (32), dans lequel le dispositif de fixation (40) présente deux zones de fixation auxquelles ladite au moins une console de véhicule (20, 30) peut être verrouillée au moyen dudit au moins un élément de verrouillage (32), et dans lequel le dispositif de fixation (40) présente au niveau d'une zone de fixation en contact électrique parmi les deux zones de fixation au moins une deuxième surface de contact électrique (42) correspondant à la première surface de contact électrique (35), et
(c) un appareil de commande (11) qui est relié électriquement à ladite au moins une deuxième surface de contact électrique (42) et qui est conçu pour enregistrer le contact électrique entre ladite au moins une première surface de contact électrique (35) et ladite au moins une deuxième surface de contact électrique (42) et pour émettre une instruction,
(d) dans lequel le dispositif de fixation (40) présente au moins deux rails de guidage (41) et ladite au moins une console de véhicule (20, 30) présente au moins deux éléments de guidage (33) qui sont guidés respectivement dans l'un des au moins deux rails de guidage (41),
(e) dans lequel ladite au moins une première surface de contact électrique (35) est disposée au niveau d'au moins un élément de contact extractible (34) à l'intérieur d'un des au moins deux éléments de guidage (33), et la deuxième surface de contact électrique (42) est disposée au niveau d'au moins l'un des au moins deux rails de guidage (41), dans lequel l'élément de contact extractible (34) est réalisé de telle sorte que l'élément de contact extractible (34) sort lors du verrouillage au niveau de la zone de fixation en contact électrique d'une position protégée à l'intérieur de l'élément de guidage (33) vers une position en contact électrique dans laquelle ladite au moins une première surface de contact électrique (35) et ladite au moins une deuxième surface de contact électrique (42) entrent en contact électrique.

2. Système de console de véhicule (10) selon la revendication précédente, **caractérisé en ce que** ladite au moins une console de véhicule (20, 30) présente quatre éléments de guidage (33), dans lequel deux éléments de contact extractibles (34) munis de premières surfaces de contact électriques (35) sont disposés à l'intérieur de deux éléments de guidage (33) diamétralement opposés, et chacun des deux rails de guidage (41) présente une deuxième surface de contact électrique (42), dans lequel les deuxièmes surfaces de contact électriques (42) sont décalées les unes par rapport aux autres le long des rails de guidage (41).

3. Système de console de véhicule (10) selon l'une quelconque des revendications précédentes, **caractérisé en ce que** ladite au moins une première surface de contact électrique (35) est reliée à un réseau de résistance (12) dans lequel est installé un commutateur (14) qui est conçu pour être ouvert ou fermé lorsqu'une fonction de la console de véhicule (20, 30) est déclenchée.

4. Système de console de véhicule (10) selon l'une quelconque des revendications précédentes, **caractérisé en ce que** ladite au moins une première surface de contact électrique (35) est reliée à un appareil de commande de console (15) qui est équipé d'une unité de communication sans fil et est conçu pour échanger un ou plusieurs signaux avec l'appareil de commande (11) lorsqu'une fonction de la console de véhicule (20, 30) est déclenchée.

5. Système de console de véhicule (10) selon la revendication 3 ou 4, **caractérisé en ce que** la fonction est une remontée ou un abaissement d'un accoudoir (21) d'une console de véhicule (20, 30) réalisée sous forme de siège de véhicule (20), une montée ou une descente d'une console de véhicule (20, 30) réalisée sous forme de console de table de véhicule (30), et/ou une extraction ou un déploiement d'une surface de table (21) ou d'un tiroir de table d'une console de véhicule (20, 30) réalisée sous forme de console de table de véhicule (30).

6. Système de console de véhicule (10) selon l'une quelconque des revendications précédentes, **caractérisé en ce que** l'appareil de commande (11) est conçu pour émettre comme instruction un fonctionnement d'un chauffage de siège de la console de véhicule (20, 30) réalisée sous forme de siège de véhicule (20) au moyen d'une alimentation de ladite au moins une deuxième surface de contact électrique (42).

7. Véhicule automobile (1) comprenant un système de console de véhicule (10) selon l'une quelconque des revendications précédentes.

8. Véhicule automobile (1) selon la revendication 7, **caractérisé en ce que** la zone de fixation en contact électrique se trouve entre un siège de conducteur (20) et un siège de passager (20), dans lequel ladite au moins une console de véhicule (20, 30) du système de console de véhicule (10) est réalisée sous forme de console de table de véhicule (30) et l'appareil de commande (11) est conçu pour émettre comme instruction un affichage d'un état de la console de table de véhicule (30) sur un dispositif d'affichage (16) du véhicule automobile (1).
